# FASCICULE DE BREVET EUROPEEN

(11) **EP 1 705 034 B1**
(45) Date de publication et mention de la délivrance du brevet: **04.11.2009**
(21) Numéro de dépôt: 06111230.6
(22) Date de dépôt: 16.03.2006
(51) Int. Cl.: B60C 11/24

(54) **Indicateur d'usure pour pneumatique.**
Abriebindikator für Luftreifen
Wear indicator for tyres

(30) Priorité: 25.03.2005 FR 0503062
(43) Date de publication de la demande: 27.09.2006
(73) Titulaire: Société de Technologie Michelin, 63000 Clermont-Ferrand Cedex 09 (FR); Michelin Recherche et Technique S.A., 1763 Granges-Paccot (CH)
(72) Inventeur: Kemp, Preston Butler, Jr, 63000 CLERMONT-FERRAND (FR); Foucher, Benoit, 63400 CHAMALIERES (FR)
(74) Mandataire: Lasson, Cédric Y. M.

(56) Documents cités:
- US-A- 4 226 274

## Description

### Domaine de l'invention

La présente invention concerne les indicateurs d'usure de la bande de roulement pour pneumatiques.

### Définitions

Par « bande de roulement » pour pneumatique, on entend une quantité de composition caoutchouteuse, délimitée par deux surfaces principales dont une est destinée à entrer en contact avec le sol lorsque le pneumatique roule, et par des surfaces latérales.

Par « surface de roulement », on entend la surface formée par les points de la bande de roulement d'un pneumatique qui entrent en contact avec le sol lorsque le pneumatique roule.

Par « taux d'usure » d'une bande de roulement d'un pneumatique, on entend le ratio entre l'épaisseur que la bande de roulement a perdue par usure et l'épaisseur totale que la bande de roulement peut perdre avant de devoir être remplacée ou recreusée. Ainsi, un taux d'usure de 25 % signifie que la bande de roulement a perdu un quart de la composition caoutchouteuse à user jusqu'à ce qu'un remplacement (ou un recreusage) soit nécessaire. Le taux d'usure est généralement exprimé en pour cent ; à un moment donné, toutes les zones de la bande de roulement n'ont pas forcément le même taux d'usure (« usure irrégulière »).

Le terme « pneumatique » désigne ici tous types de bandages élastiques, soumis en service à une pression interne ou non.

### Arrière-plan technologique

On sait que la bande de roulement d'un pneumatique subit une usure résultant du roulage du pneumatique. Si la bande de roulement est pourvue de rainures, cette usure a comme effet de réduire la profondeur des rainures, dégradant ainsi la performance du pneumatique sur sol mouillé. Arrivé à un certain taux d'usure, le pneumatique ne permet plus de rouler dans des conditions optimales de sécurité. On procède alors à un remplacement du pneumatique ou de sa bande de roulement (« rechapage ») ou, si l'épaisseur restante de la bande de roulement le permet, à un recreusage des rainures de la bande de roulement.

Le taux d'usure de la bande de roulement peut être suivi par une mesure de la profondeur des rainures, mais cette opération nécessite un outil de mesure adapté, ce qui lui confère une certaine lourdeur. Il a donc été proposé depuis longtemps de placer des indicateurs d'usure sur la surface de roulement pour alerter visuellement le conducteur du véhicule lorsque la profondeur minimale des rainures de la bande de roulement était atteinte. L'usage de compositions caoutchouteuses de couleur a souvent été envisagé : à titre d'exemple, le document FR 1 480 472 prévoit une bande de roulement incorporant des matériaux en couleurs, contrastant avec celles du pneumatique, qui apparaissent quand a été atteinte la limite d'usure permise pour les bandes de roulement. Le document FR 797 713 propose d'incorporer dans la bande de roulement un bouchon de caoutchouc, le bouchon étant divisé diagonalement en deux parties de couleur différente. Au fur et à mesure de l'usure de la bande de roulement, la répartition des couleurs visible en surface change ; lorsque la partie visible du bouchon a complètement changé de couleur, le pneumatique est à remplacer. Le document US 4,226,274 montre un exemple plus récent de la mise en oeuvre du même principe. L'utilisation de compositions caoutchouteuses de couleur a cependant un certain nombre d'inconvénients, notamment au niveau de la complexité et du coût du procédé de fabrication ; le positionnement précis dans la bande de roulement est difficile à assurer. De plus, des inserts de compositions caoutchouteuses de couleur peuvent constituer des zones d'usure irrégulière.

Il est possible d'éviter l'usage de compositions caoutchouteuses de couleur en jouant sur le contraste optique entre la composition caoutchouteuse formant la bande de roulement et une rainure ou une cavité dans cette même bande. Le document GB 1,279,966 décrit une bande de roulement pourvue de rainures de profondeurs différentes réparties sur la largeur de la bande de roulement : au fur et à mesure que le pneumatique s'use, le nombre de rainures diminue ; le nombre de rainures restantes permet de tirer des conclusions sur le taux d'usure de la bande de roulement. Le même principe a été repris dans les documents EP 0 250 113 et EP 0 853 553 ; dans ce dernier document, des cavités de profondeurs différentes sont réparties tout autour de la circonférence du pneumatique. Cette approche se distingue par sa facilité de mise en oeuvre, mais elle a un inconvénient majeur : le nombre de rainures ou cavités présentes sur la surface de roulement à un moment donné de la vie du pneumatique ne donne pas une information précise du taux d'usure. Autrement dit, l'utilisateur perçoit visuellement l'état d'avancement de l'usure, mais, à moins de disposer de renseignements sur la géométrie de la bande de roulement à l'état initial et final, il ne sait pas où la bande de roulement se situe dans son « cycle de vie ».

Deux voies ont été proposées pour surmonter cette difficulté :

Le document US 2002/0036039 prévoit un indicateur d'usure comprenant deux cavités de même profondeur mais ayant une géométrie différente. La section de l'une des deux cavités dans la surface de roulement diminue au fur et à mesure que le pneumatique s'use, alors que la section de la deuxième cavité reste constante. Une comparaison des sections des deux cavités permet de déterminer le taux d'usure de la bande de roulement. Cette approche a l'avantage de permettre une mesure directement « lisible » du taux d'usure de la bande de roulement ; son inconvénient réside dans le fait qu'elle implique deux cavités de forme ou d'orientation différente, ce qui augmente le taux d'entaillage de la surface de roulement et peut se traduire par la création de zones d'usure irrégulière.

Le document US 3,653,422 propose une autre voie. Une pluralité de cavités de profondeurs différentes sont combinées pour former un indicateur d'usure ; chaque cavité a une section dont la forme contribue à former un message à l'attention de l'utilisateur du pneumatique ; au fur et à mesure que le pneu s'use, le message change. US 6,523,586 exploite la même idée en associant plusieurs cavités dont chacune a une trace (dans la surface de roulement) correspondant au chiffre exprimant l'épaisseur restante (en millimètres) qu'aura la bande de roulement au moment où l'usure fera disparaître la cavité en question. Ainsi, lorsque une bande de roulement ayant une épaisseur initiale de 10 mm est réduite à une épaisseur de 6 mm par usure, l'indicateur d'usure, initialement composé de neuf cavités formant les chiffres 1 à 9, comporte encore cinq cavités ayant une section, dans la surface de roulement, correspondant aux chiffres 1 à 5. Cette solution a l'avantage de permettre l'affichage, en valeurs absolues, de l'épaisseur de la bande de roulement restante, mais elle comporte toutefois certains inconvénients. Premièrement, elle nécessite un grand nombre de cavités, notamment si on veut déterminer le taux d'usure à plusieurs positions sur la largeur et sur la périphérie de la bande de roulement.
Deuxièmement, l'utilisateur peut être troublé par le fait que plusieurs valeurs sont affichées en même temps et qu'il ne faut retenir que la valeur la plus importante (dans l'exemple cité plus haut, lorsque l'épaisseur restante est de 5 mm, les chiffres 1 à 5 apparaissent sur la surface de roulement). Enfin, elle est liée à un système de mesures particulier (le système métrique dans l'exemple) et nécessite une adaptation pour des régions où les utilisateurs ne sont pas familiers avec ce système.

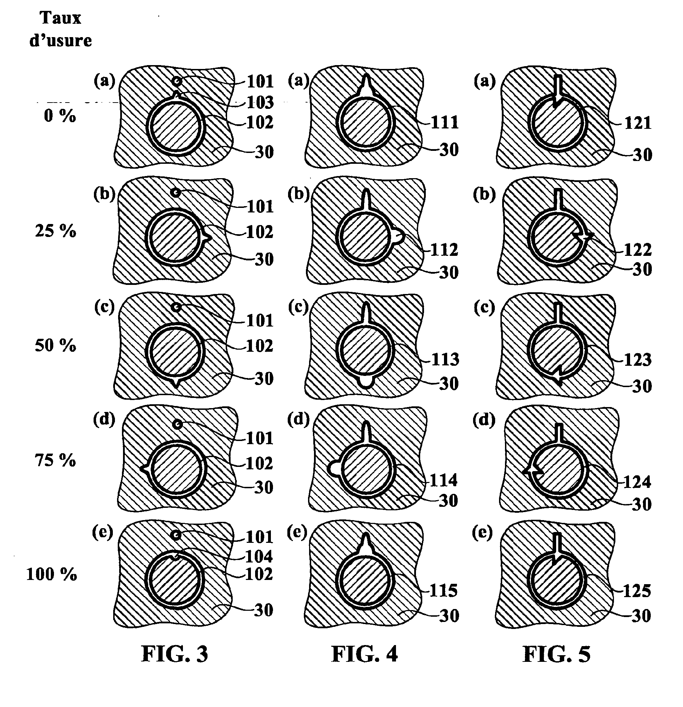

Plus récemment, un autre indicateur permettant de détecter le moment où les pneumatiques d'un véhicule doivent être intervertis a été proposé. Le document EP 1 574 363 décrit un indicateur formé par une cavité dont la trace sur la surface de roulement est modifiée en fonction du taux d'usure de la bande de roulement. Lorsqu'un certain seuil d'usure est franchi, la trace change radicalement de forme, par exemple d'une forme circulaire vers une forme carrée ou vice versa. Un tel indicateur a l'avantage de signaler de façon visible l'atteinte de certains seuils d'usure, mais il comporte la difficulté d'identifier le taux d'usure au moment de l'observation. L'utilisateur doit consulter une référence pour savoir quel taux d'usure est atteint, notamment lorsque l'indicateur permet de distinguer plusieurs états d'usure (comme celui de la Figure 3(h) du document cité).

Le document EP-1-1 830 008, qui constitue un art antérieur au sens de l'Article 54(3) CBE, divulgue une bande de roulement comportant une surface de roulement et plusieurs indicateurs d'usure formés par plusieurs cavités débouchant sur la surface de roulement, la forme géométrique de la trace des cavités sur la surface de roulement étant modifiée en fonction du taux d'usure de la bande de roulement. Chaque indicateur d'usure comporte une série de portions empilées dont chacune a une configuration qui indique de manière visible l'épaisseur de la bande de roulement, les portions ayant chacune une configuration différente.

### Résumé de l'invention

Le premier objectif de la présente invention est de fournir une bande de roulement comportant au moins un indicateur d'usure simple, permettant de déterminer le taux d'usure en un clin d'oeil et occupant une surface très limitée de la surface de roulement.

Signalons que ces indicateurs d'usure ne doivent pas être confondus avec les témoins d'usure situés en fond de sculpture, dans les rainures principales du pneumatique. La présente invention ne cherche pas à remplacer ces témoins, mais à donner une information plus complète à l'usager du pneumatique.

Il est proposé d'atteindre cet objectif à l'aide d'une bande de roulement comportant une surface de roulement et au moins un indicateur d'usure formé par une seule cavité débouchant sur la surface de roulement, dans laquelle la forme géométrique de la trace de la cavité sur la surface de roulement est modifiée en fonction du taux d'usure de la bande de roulement et dans laquelle la forme géométrique de ladite trace est une expression analogique du taux d'usure de la bande de roulement.

La forme de la trace est une « expression analogique » du taux d'usure de la bande de roulement lorsque cette forme exprime à elle seule et directement le taux d'usure, sans qu'il soit indispensable d'introduire une autre référence. En d'autres termes, un indicateur pour lequel la forme géométrique de ladite trace est une expression analogique du taux d'usure de la bande de roulement permet à l'utilisateur de connaître le taux d'usure « en un coup d'oeil », sans se référer à autre chose ; il est en quelque sorte auto-explicatif.

En cela, un indicateur selon l'invention se distingue, par exemple, d'un indicateur tel que décrit dans EP 1 574 363 où la forme géométrique de la trace en elle-même ne permet pas de connaître le taux d'usure. Ce n'est qu'en consultant un document de référence que l'utilisateur peut identifier le taux d'usure. A titre d'exemple, l'indicateur peut être dimensionné de façon à ce qu'il adopte une géométrie triangulaire à un taux d'usure de 80 %, mais ce taux d'usure ne découle pas d'une manière évidente de la géométrie triangulaire en tant que telle. L'indicateur divulgué dans US 6,523,586 ne permet pas non plus d'obtenir une expression analogique du taux d'usure, dans la mesure où l'indication de l'épaisseur restante ne permet pas à l'utilisateur de connaître le taux d'usure s'il ne dispose pas par ailleurs de l'épaisseur totale à user. Le même constat se vérifie encore pour l'indicateur d'usure qu'enseigne le document EP 0 250 113, car si un tel indicateur permet d'illustrer l'avancement de l'usure et de signaler qu'un seuil est atteint, l'utilisateur ne peut pas connaître directement le taux d'usure. Pour cela, il doit connaître le nombre d'incisions et leur répartition en fonction de l'épaisseur résiduelle de la bande de roulement.

L'indicateur de US 2002/0036039 se rapproche d'une expression analogique du taux d'usure, dans la mesure où la comparaison de la surface de deux cavités dont l'une seulement change en fonction du taux d'usure permet d'estimer le taux d'usure. Ce type d'indicateur présente néanmoins l'inconvénient de nécessiter une comparaison optique de deux surfaces alors que cette opération mentale n'est pas nécessaire dans le cas d'un indicateur selon l'invention.

La modification de la forme géométrique de la trace peut se faire de façon discontinue, c'est-à-dire par pas discrets, ou continue. Une modification discontinue présente l'avantage d'être plus économique sur le plan industriel (la fabrication des éléments moulants correspondants est moins coûteuse) alors qu'une modification continue permet une plus grande précision dans l'affichage du taux d'usure.

Selon un mode de réalisation préférentiel, l'indicateur d'usure est formé par une seule cavité débouchant sur la surface de roulement, ce qui permet d'avoir un affichage particulièrement compact et de faciliter à l'utilisateur la lecture du taux d'usure. Ce mode de réalisation a également l'avantage de réduire le nombre d'éléments moulants nécessaire au moulage.

Préférentiellement, l'aire de la trace de la cavité change en fonction du taux d'usure de la bande de roulement, ce qui augmente la visibilité et la facilité de lecture du taux d'usure pour l'utilisateur.

L'aire de la trace de la cavité peut notamment être une fonction sensiblement linéaire du taux d'usure de la bande de roulement, ce qui a l'avantage que la surface de la trace participe à l'expression analogique fournie par l'indicateur.

L'aire de ladite trace est considérée comme étant une fonction « sensiblement linéaire » du taux d'usure lorsque, au cours de l'usure du pneumatique, l'aire de la trace évolue de manière linéaire ou quasi linéaire en fonction du taux d'usure, entre aire initiale Aᵢ (l'aire de la trace pour un taux d'usure de 0 %) et l'aire finale A_{f} (l'aire de la trace pour un taux d'usure de 100 %) : l'écart maximal entre l'aire de la trace réelle et une fonction linéaire qui relie Aᵢ à A_{f} - les écarts étant déterminés au même taux d'usure - est inférieur à 25 % de la différence entre Aᵢ et A_{f}, et, plus préférentiellement, inférieur à 10 % de cette différence.

En principe, la modification de la forme géométrique et la modification de l'aire de la trace peuvent se faire de manière indépendante (chacune pouvant changer de façon continue ou discontinue, c'est-à-dire par pas discrets), mais il est préférable que cette modification s'effectue de la même façon pour les deux.

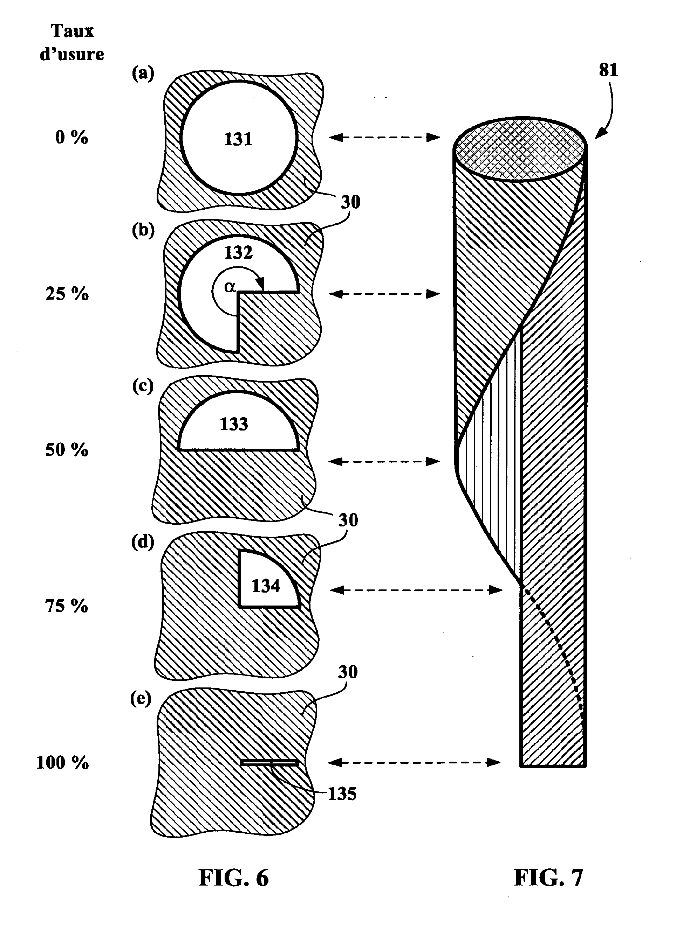

Il a été constaté qu'une représentation sur la base d'une géométrie circulaire est particulièrement avantageuse pour permettre à l'usager de saisir très rapidement l'information concernant le taux d'usure. Préférentiellement, la trace de la cavité sur la surface de roulement a la forme d'un secteur de disque, l'angle d'ouverture du secteur étant une fonction, de préférence sensiblement linéaire, du taux d'usure de la bande de roulement. Figure 6(b) montre comment l'angle d'ouverture (désigné par α) est défini.

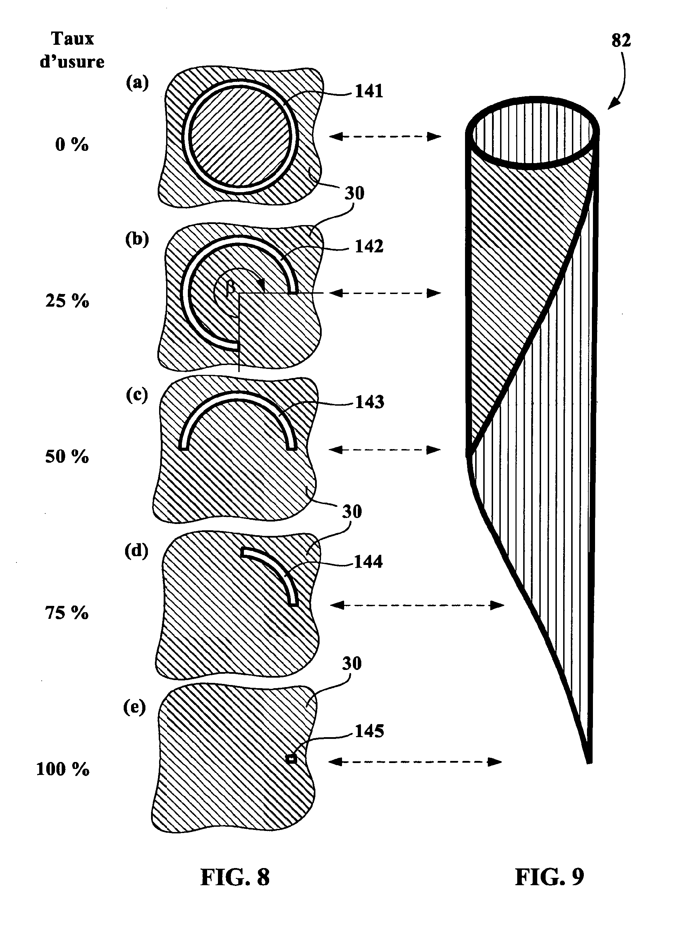

Selon une variante avantageuse, la trace de la cavité sur la surface de roulement comprend un secteur d'anneau, l'angle d'ouverture du secteur d'anneau étant une fonction sensiblement linéaire du taux d'usure de la bande de roulement. Par « anneau », on entend la surface comprise entre deux cercles concentriques ; Figure 8(b) montre comment l'angle d'ouverture du secteur d'anneau (désigné par β) est défini.

De telles géométries rondes ont de surcroît l'avantage d'éviter la présence d'angles aigus qui pourraient constituer des amorces de fissure.

Il est possible de faciliter encore la lecture de l'information concernant le taux d'usure en donnant à la cavité une géométrie telle que la trace de la cavité sur la surface de roulement comprend une surface portante et une pluralité de parties connectées à et faisant saillie sur la surface portante, le nombre des parties faisant saillie étant une fonction du taux d'usure de la bande de roulement. De nouveau, il est préférable que le nombre des parties faisant saillie soit une fonction sensiblement linéaire du taux d'usure. Ainsi il est possible d'évaluer simplement le taux d'usure en comptant le nombre des parties faisant saillie.

Etant donné que l'usure de la bande de roulement n'est pas nécessairement régulière sur la largeur de la bande de roulement, il peut être avantageux de répartir une pluralité d'indicateurs d'usure selon l'invention transversalement, en plusieurs endroits de la surface de roulement, ce qui permet de déterminer le taux d'usure en différentes positions sur la largeur de la bande de roulement.

Préférentiellement, une pluralité d'indicateurs d'usure sont disposés à des intervalles réguliers sur la surface de roulement, dans le sens de sa plus grande dimension, c'est-à-dire autour de la périphérie du pneumatique lorsque la bande de roulement est fixée sur le pneumatique.

L'invention concerne également un pneumatique comportant une bande de roulement selon l'invention.

La forme géométrique de la trace de la cavité sur la surface de roulement étant modifiée en fonction du taux d'usure de la bande de roulement, il peut être utile et avantageux de prévoir, sur au moins un flanc du pneumatique prolongeant la bande de roulement, un moyen visuel reproduisant la forme de la trace de la cavité sur la bande de roulement à l'état initial. Bien évidemment, on peut reproduire les formes correspondant à plusieurs taux d'usure, éventuellement assorties d'une indication de l'épaisseur de bande de roulement à user avant d'atteindre une limite d'utilisation.

L'invention concerne également un élément moulant pour mouler une cavité dans la surface de roulement, cet élément moulant comportant une première partie destinée à ancrer l'élément moulant dans le moule moulant la surface de roulement et une deuxième partie destinée à mouler la cavité, cet élément moulant étant caractérisé en ce que la forme géométrique de la trace de l'élément moulant, dans un plan P1 parallèle au plan P0 séparant lesdites première et deuxième parties, est modifiée en fonction de la distance entre les plans P0 et P1 et en ce que la différence entre l'aire de la trace dans un plan P1 parallèle au plan P0 et l'aire de la trace dans un autre plan P2 parallèle au plan P0 est une fonction sensiblement linéaire de la distance entre les plans P1 et P2.

L'invention sera mieux comprise grâce à la description des dessins selon lesquels :

la figure 1 représente schématiquement, en perspective, un pneumatique dont la bande de roulement comporte une pluralité d'indicateurs d'usure ;

la figure 2 représente schématiquement, en perspective, une partie de la bande de roulement de la figure 1 ;

les figures 3 à 6 représentent schématiquement la trace d'un indicateur d'usure selon l'invention sur la surface de roulement, en fonction du taux d'usure de la bande de roulement ;

la figure 7 représente schématiquement un élément moulant permettant de mouler l'indicateur d'usure de la figure 6 ;

la figure 8 représente schématiquement la trace d'un autre indicateur d'usure selon l'invention sur la surface de roulement, en fonction du taux d'usure de la bande de roulement ;

la figure 9 représente schématiquement un élément moulant permettant de mouler l'indicateur d'usure de la figure 8 ;

les figures 10 à 13 représentent schématiquement la trace d'autres indicateurs d'usure selon l'invention sur la surface de roulement, en fonction du taux d'usure de la bande de roulement ;

la figure 14 représente schématiquement une section radiale partielle d'un pneumatique pour véhicule poids lourd dont la bande de roulement est pourvue de plusieurs indicateurs d'usure selon l'invention ;

les figures 15 à 18 représentent schématiquement une vue de haut de la tranche de bande de roulement de la figure 14, à différents états d'avancement de l'usure ;

la figure 19 montre l'évolution de l'aire de la trace de plusieurs indicateurs d'usure en fonction du taux d'usure.

### Description de modes de réalisation

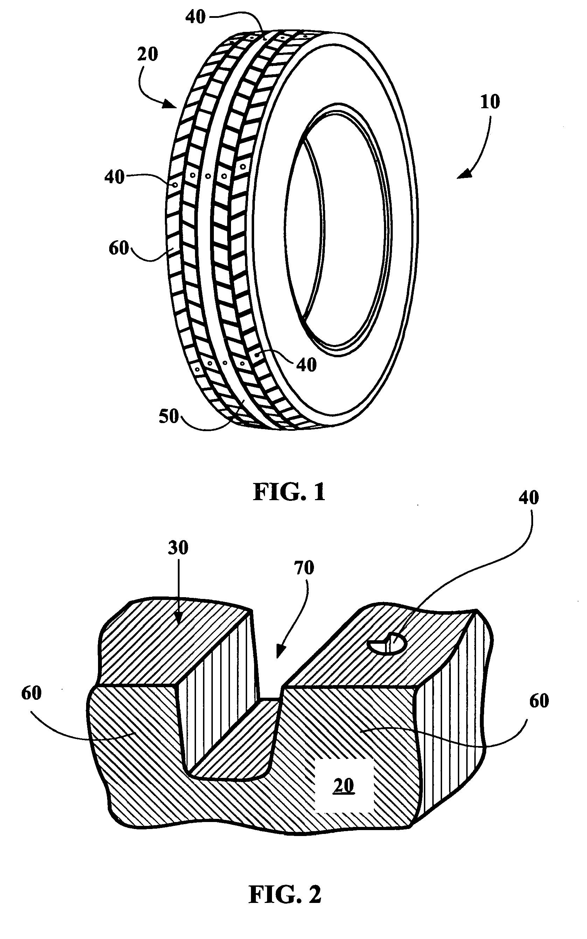

La figure 1 représente schématiquement, en perspective, un pneumatique 10 dont la bande de roulement 20 comporte une pluralité de cavités 40 servant d'indicateurs d'usure. Les cavités 40 sont disposées sur toute la largeur de la surface de roulement, aussi bien dans la nervure centrale 50 que dans les éléments de sculpture 60 de la bande de roulement 20. On notera également que des cavités 40 sont disposées à plusieurs positions autour de la périphérie du pneumatique.

La figure 2 représente schématiquement, en perspective, la partie d'une tranche d'une bande de roulement 20 selon l'invention. La figure montre deux éléments de sculpture 60 séparés par une rainure 70 ; sur l'un des éléments de sculpture 60 une cavité 40 est disposée dans la surface de roulement 30. La cavité 40 est du même type que celle représentée à la figure 6. Dans l'exemple représenté, la forme géométrique de la trace de la cavité 40 sur la surface de roulement 30 correspond à un secteur de disque avec un angle d'ouverture de 270°, correspondant au taux d'usure de 25 % de la bande de roulement.

La figure 3 représente schématiquement la trace d'un indicateur d'usure selon l'invention sur la surface de roulement 30, en fonction du taux d'usure de la bande de roulement. L'indicateur est formé par deux cavités 101 (ayant une trace circulaire) et 102 (ayant une trace en forme d'anneau pourvu d'une excroissance 103) débouchant sur la surface de roulement 30. Au fur et à mesure que la bande de roulement s'use, l'indicateur change de forme géométrique (la trace de la cavité 102 effectue une rotation autour de son centre alors que la position de la cavité 101 reste inchangée). Si l'on adopte la convention d'une lecture dans le sens des aiguilles d'une montre, l'emplacement de l'excroissance 103 par rapport à la cavité 101 permet de lire immédiatement le taux d'usure, sans qu'il soit indispensable d'introduire une autre référence, de connaître l'épaisseur initiale de la bande de roulement, de comparer deux surfaces etc. ; la forme de la trace est donc une expression analogique du taux d'usure de la bande de roulement. En revanche, l'aire de la trace ne change pas en fonction de l'usure de la bande de roulement. Pour éviter que l'indicateur présente la même trace aux taux d'usure de 0 et de 100 %, l'excroissance 103 change de côté (d'une position radialement extérieure à l'anneau vers une position radialement intérieure à l'anneau) et se transforme en l'excroissance 104 (ayant la même aire que l'excroissance 103) lorsque la bande de roulement arrive à son seuil d'usure.

La figure 4 représente schématiquement la trace d'un autre indicateur d'usure selon l'invention sur la surface de roulement 30, en fonction du taux d'usure de la bande de roulement. L'indicateur est formé par une seule cavité 111 débouchant sur la surface de roulement 30. Au fur et à mesure que la bande de roulement s'use, la trace de l'indicateur change de forme géométrique, de façon analogue à l'indicateur de la figure 3. L'aire de la trace n'est pas constante : elle augmente légèrement lorsque la bande de roulement commence à s'user, puis diminue de nouveau lorsque le taux d'usure approche 100 % ; l'aire de la trace n'est donc pas une fonction linéaire du taux d'usure.

L'avantage de l'indicateur de la figure 4 par rapport à celui de la figure 3 réside avant tout dans le fait qu'il ne nécessite qu'un seul élément moulant, ce qui simplifie le moulage.

La figure 5 représente schématiquement la trace d'une variante de l'indicateur de la figure 4. L'excroissance dont l'emplacement change en fonction du taux d'usure a la forme d'une flèche, ce qui a l'avantage de rendre explicite la convention d'une lecture dans le sens des aiguilles d'une montre qui est implicite dans les indicateurs des figures 3 et 4. Au fur et à mesure que la bande de roulement s'use, la trace de l'indicateur sur la surface de roulement 30 change de forme géométrique, affichant successivement les formes 121 à 125. L'aire de la trace n'est pas tout à fait constante.

La figure 6 représente schématiquement la trace d'un indicateur d'usure selon l'invention sur la surface de roulement 30, en fonction du taux d'usure de la bande de roulement. Lorsque la bande de roulement est à l'état initial, la trace 131 a la forme d'un disque. Au fur et à mesure que la bande s'use, la trace de la cavité sur la surface de roulement 30 prend la forme d'un secteur de disque 132-135 dont l'angle d'ouverture α est une fonction linéaire du taux d'usure de la bande de roulement. Dans l'exemple choisi, la géométrie de la cavité a été choisie de façon à ce que celle-ci ne disparaisse pas totalement, même à un taux d'usure de 100 %. Ainsi il est possible de rappeler l'existence de l'indicateur à cet endroit de la surface de roulement, même lorsque l'usure de la bande de roulement est très avancée.

Cet indicateur présente l'avantage d'une meilleure lisibilité par rapport aux indicateurs des figures 3 à 5 ainsi qu'une plus grande facilité de démoulage.

La figure 7 représente schématiquement un élément moulant 81 permettant de mouler l'indicateur d'usure de la figure 6. La partie permettant la fixation de l'élément moulant 81 dans le moule n'est pas représentée.

La figure 8 représente schématiquement la trace d'un autre indicateur d'usure selon l'invention sur la surface de roulement, en fonction du taux d'usure de la bande de roulement. Lorsque la bande de roulement est à l'état initial, la trace 141 a la forme d'un anneau. Au fur et à mesure que la bande s'use, la trace de la cavité sur la surface de roulement 30 prend la forme d'un secteur d'anneau 142-145 dont l'angle d'ouverture β est une fonction linéaire du taux d'usure de la bande de roulement.

La figure 9 représente schématiquement un élément moulant 82 permettant de mouler l'indicateur d'usure de la figure 8. Contrairement à l'élément moulant 81 de la figure 7, cet élément moulant est creux. La partie permettant la fixation de l'élément moulant 82 dans le moule n'est pas représentée.

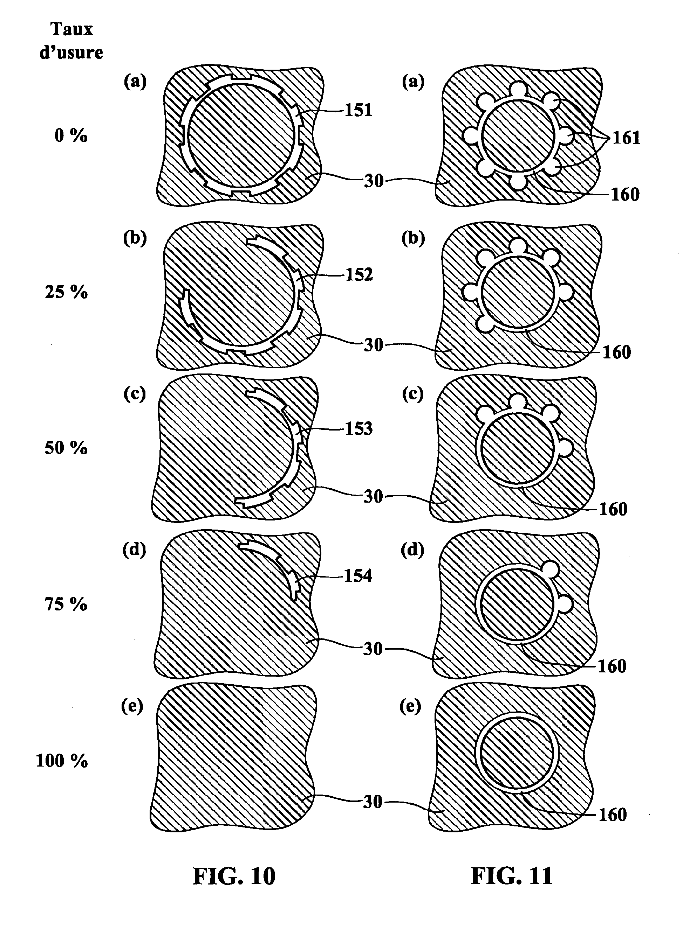

Les figures 10 et 11 représentent schématiquement la trace d'autres indicateurs d'usure selon l'invention sur la surface de roulement 30, en fonction du taux d'usure de la bande de roulement. Dans les deux cas, la trace de la cavité sur la surface de roulement 30 comprend une surface portante ayant la forme d'un anneau et une pluralité de parties faisant saillie sur la surface portante ayant chacune la forme d'un secteur d'anneau (figure 10) ou d'un disque (figure 11). Dans le cas de l'indicateur d'usure de la figure 10 la surface portante et les parties faisant saillie disparaissent au fur et à mesure que l'usure avance ; dans le cas de l'indicateur d'usure de la figure 11, uniquement les parties 161 faisant saillie disparaissent alors que la surface portante 160 subsiste. L'indicateur d'usure selon la figure 11 a donc l'avantage que l'indicateur ne disparaît pas totalement lorsque le taux d'usure est très élevé. Dans les deux cas, le comptage des éléments faisant saillie qui subsistent permet de déterminer facilement le taux d'usure. A titre d'exemple, l'indicateur d'usure de la figure 11(d) ne compte plus que deux parties faisant saillie. Sachant que l'indicateur comptait initialement huit parties faisant saillie, on constate que six parties sur huit (ou 75 %) ont disparu. Le taux d'usure est donc de 75 %. Dans le cas de l'indicateur d'usure de la figure 11, le taux d'usure est affiché avec une résolution de 12.5 %, mais en modifiant le nombre de parties faisant saillie, on peut obtenir une finesse de gradation plus ou moins importante. Il serait bien sûr possible d'avoir un indicateur d'usure semblable à celui de la figure 11, mais sans la surface portante. L'avantage de la géométrie de l'indicateur de la figure 11 est de rassembler, d'une façon qui « saute aux yeux », les parties dont le nombre diminue au fur et à mesure que le taux d'usure augmente.

Pour l'indicateur d'usure de la figure 10, l'aire de la trace de la cavité sur la surface de roulement est une fonction quasi linéaire du taux d'usure : l'écart maximal entre l'aire de la trace et une fonction linéaire qui relie Aᵢ à A_{f} dépend du dimensionnement de la surface portante et des parties faisant saillie sur cette surface portante ; typiquement, l'écart maximal est inférieur à 5 % de la différence entre Aᵢ et A_{f}.

En ce qui concerne l'indicateur d'usure de la figure 11, l'aire de la trace de la cavité sur la surface de roulement est une fonction en escalier du taux d'usure. L'écart maximal entre l'aire de la trace et une fonction linéaire qui relie Aᵢ à A_{f} dépend du nombre des parties faisant saillie ; dans l'exemple représenté, il est de 12.5 %.

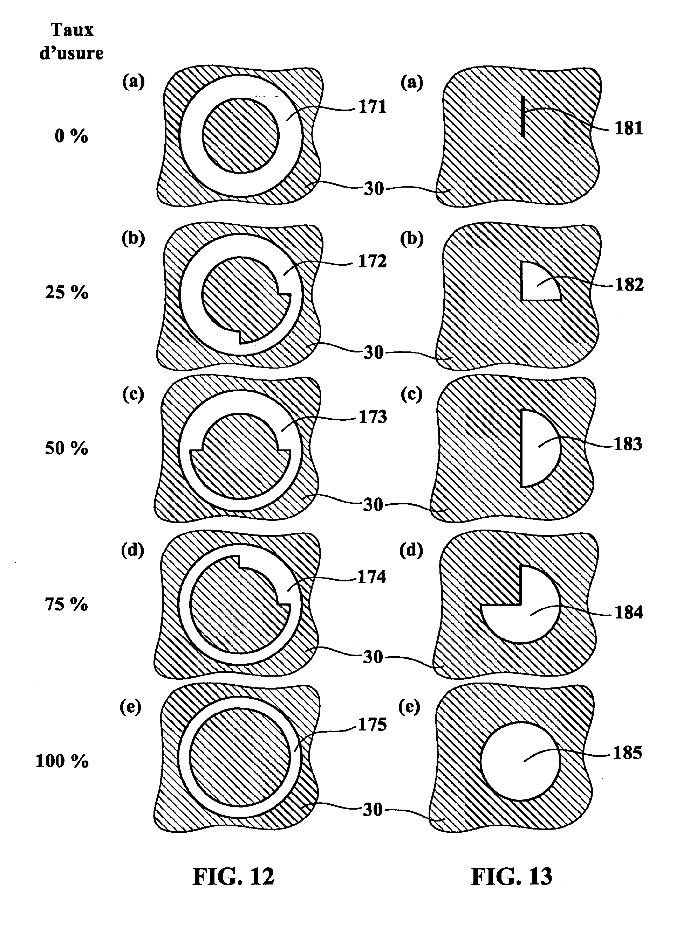

La figure 12 représente schématiquement la trace d'un autre indicateur d'usure selon l'invention sur la surface de roulement, en fonction du taux d'usure de la bande de roulement. Lorsque la bande de roulement est à l'état initial, la trace 171 a la forme d'un anneau. Au fur et à mesure que la bande s'use, la trace de la cavité sur la surface de roulement 30 prend la forme de la combinaison d'un anneau avec un secteur d'anneau dont l'angle d'ouverture est une fonction linéaire du taux d'usure de la bande de roulement. Lorsque la bande de roulement a atteint son taux d'usure maximal, la trace 175 de la cavité a de nouveau la forme d'un anneau, mais son épaisseur radiale est inférieure à celle de l'anneau initial 171.

La figure 13 représente schématiquement la trace d'un autre indicateur d'usure selon l'invention sur la surface de roulement, en fonction du taux d'usure de la bande de roulement. A la différence des indicateurs illustrés dans les figures précédentes, l'aire de la trace de la cavité sur la surface de roulement 30 augmente avec le taux d'usure ; il s'agit en quelque sorte du « négatif » de l'indicateur de la figure 6. L'homme du métier comprendra que le moulage d'un tel indicateur n'est possible que lorsque la bande de roulement est moulée séparément et fixée sur le pneumatique après son moulage.

Lorsque la bande de roulement est à l'état initial, la trace 181 ne débouche guère (ou pas) sur la surface de roulement. Au fur et à mesure que la bande s'use, la trace de la cavité sur la surface de roulement 30 prend la forme d'un secteur de disque 182-185 dont l'angle d'ouverture est une fonction linéaire du taux d'usure de la bande de roulement. Lorsque la trace de la cavité sur la surface de roulement est circulaire, la bande de roulement a atteint son taux d'usure maximal et doit être remplacée.

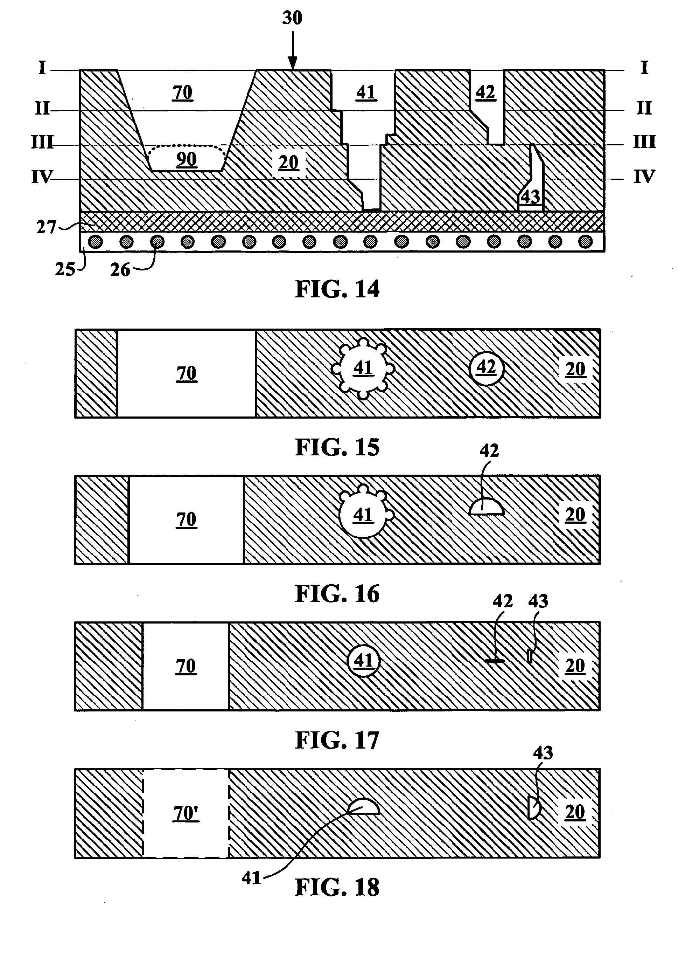

La figure 14 représente schématiquement une section radiale partielle d'un pneumatique pour véhicule poids lourd. La figure montre une bande de roulement 20 qui est séparée de la nappe 25 comportant des renforts 26 par une couche de composition caoutchouteuse 27. Dans la partie représentée de la bande de roulement 20 on voit une rainure 70 dans laquelle se trouve un témoin d'usure traditionnel 90, ainsi que des indicateurs d'usure 41 à 43 selon l'invention.

Le pneumatique en question peut être recreusé lorsque la bande de roulement 20 est usée de manière à ce que la surface de roulement 30 atteint le témoin d'usure 90. Les indicateurs d'usure 41 à 43 sont conçus de façon à permettre un suivi du taux d'usure avant et après le recreusage, comme l'illustrent les figures 15 à 18.

La figure 15 représente schématiquement et vue d'en haut, une partie de la bande de roulement 20 de la figure 14, à l'état initial (niveau indiqué par la ligne I-I dans la figure 14). Seuls les indicateurs 41 et 42 débouchent sur la surface de roulement 30.

La figure 16 représente la même partie de la bande de roulement 20 après usure. La surface de roulement 30 a atteint le niveau indiqué par la ligne II-II dans la figure 14, correspondant à la moitié de l'usure possible avant recreusage, comme l'indiquent les indicateurs 41 et 42.

La figure 17 représente la même partie de la bande de roulement 20 au moment où la bande 20 doit être recreusée (niveau indiqué par la ligne III-III dans la figure 14). L'indicateur 42 est sur le point de disparaître, l'indicateur 43 apparaît sur la surface de roulement. On notera que l'indicateur 41 change de géométrie : on passe d'une géométrie semblable à celle de la figure 11 à une géométrie équivalente à celle de la figure 6. Bien entendu, le diamètre de la trace circulaire de l'indicateur 41 à la figure 17 n'est pas nécessairement inférieur au diamètre de la surface portante (circulaire) du même indicateur aux figures 15 et 16.

La figure 18 représente la même partie de la bande de roulement 20 après recreusage : la rainure 70 a été recreusée pour former la nouvelle rainure 70'. Seuls les indicateurs 41 et 43 subsistent ; tous les deux indiquent le taux d'usure de la bande de roulement 20 résiduelle.

L'homme du métier comprendra que l'indicateur d'usure 43 n'est possible que lorsque la bande de roulement est moulée séparément et fixée sur le pneumatique après son moulage, comme par exemple dans le procédé de rechapage. L'indicateur 41 a l'avantage qu'il peut être moulé même lorsque la bande de roulement 20 est moulée en même temps que le pneumatique ; son inconvénient réside dans le fait que ses dimensions sont relativement plus importantes pour que l'indicateur servant après le recreusage puisse avoir une aire suffisante.

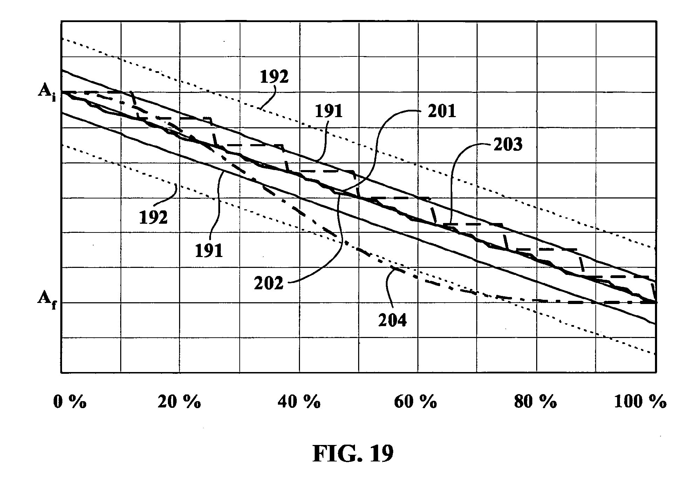

La figure 19 montre l'évolution de l'aire de la trace de plusieurs indicateurs d'usure sur la surface de roulement, en fonction du taux d'usure. Pour un indicateur comme ceux des figures 6 et 8, l'évolution de l'aire entre la valeur initiale Aᵢ et la valeur finale A_{f} est parfaitement linéaire (courbe pleine 201), pour un indicateur tel que celui représenté dans la figure 10, on constate de légers écarts de la courbe linéaire (courbe pleine 202 ; A_{f} étant nul pour l'indicateur de la figure 10). La situation se présente un peu différemment pour un indicateur comme celui de la figure 11 (courbe en tireté 203) : l'aire évolue selon une fonction en escalier, la disparition de chaque élément faisant saillie correspondant à une marche distincte.

Le graphe montre également les marges qui correspondent à un écart de 10 % (traits pleins191) et 25 % (lignes en pointillé 192) par rapport à une fonction linéaire entre les valeurs Aᵢ et A_{f}. On voit que les indicateurs selon l'invention qui évoluent de manière continue (ligne 202) s'écartent de la courbe linéaire par des écarts significativement inférieurs à 10 % de la différence entre A_{f} et Aᵢ. Pour l'indicateur selon l'invention qui correspond à la courbe 203 et qui évolue en pas discrets, cet écart est légèrement plus grand que 10 % mais inférieur à 25 % de la différence entre A_{f} et Aᵢ. Par contre, la courbe 204 répond au critère des 10 % jusqu'à un taux d'usure d'environ 30 % ; elle s'écarte de plus de 25 % de la fonction linéaire « idéale » pour un taux d'usure près de 60 %. Contrairement aux autres cas représentés, la fonction 204 ne peut donc pas être considérée comme sensiblement linéaire.

Dans tous les exemples représentés, la cavité a une géométrie globale proche d'un cylindre. Pour les raisons invoquées plus haut, une trace circulaire a en effet des avantages considérables, mais il ne s'agit pas d'une limitation de l'invention : rien n'empêche l'homme du métier de donner à la cavité une trace ellipsoïdale, carrée, polyédrique etc.

Lorsque la trace de la cavité comprend une partie en forme de secteur de disque ou d'un secteur d'anneau, il est bien sûr possible de faire en sorte que le rayon de courbure de cette partie est modifié en fonction du taux d'usure de la bande de roulement, tout en veillant, le cas échéant, que l'aire de trace soit réduite d'une quantité qui est une fonction sensiblement linéaire du taux d'usure de la bande de roulement. Cette observation s'applique *mutatis mutandis* aux dimensions caractéristiques de la trace si celle-ci est ellipsoïdale, carrée, polyédrique etc.

Enfin, l'orientation de la cavité n'est pas nécessairement perpendiculaire à la surface de roulement. Rien ne s'oppose à ce que l'on prévoie des indicateurs d'usure qui s'étendent dans la bande de roulement selon une direction inclinée par rapport à la direction perpendiculaire à la surface de roulement.

Dans la plupart des indicateurs selon l'invention représentés, l'aire de la trace de l'indicateur sur la surface de roulement est réduite d'une quantité qui est une fonction sensiblement linéaire du taux d'usure de la bande de roulement, de façon a permettre à l'usager de suivre l'évolution de l'usure. L'homme du métier comprend qu'il pourrait être intéressant, pour certaines applications, de choisir plutôt une fonction non linéaire (telle que la fonction 204 de la figure 19), par exemple pour prévenir l'usager que la fin de vie de la bande de roulement est atteinte, avant même que ce soit effectivement le cas.

Signalons enfin que l'évolution de l'usure de la bande de roulement, telle qu'elle est mise en évidence par les indicateurs d'usure selon l'invention, peut être suivie de façon automatique par analyse d'image.

## Revendications (Revendications pour l'(les) Etat(s) contractant(s) suivant(s): DE, FR, GB, IT)

1. Bande de roulement (20) comportant une surface de roulement (30) et au moins un indicateur d'usure formé par au moins une cavité (41-43) débouchant sur la surface de roulement (30), la forme géométrique de la trace (111-115 ; 121-125 ; 131-135 ; 141-145 ; 151-154 ; 171-175 ; 181-185) de la cavité (41-43) sur la surface de roulement étant modifiée en fonction du taux d'usure de la bande de roulement et **caractérisée en ce que** la forme géométrique de ladite trace est une expression analogique du taux d'usure de la bande de roulement et **en ce que** l'aire de ladite trace change en fonction du taux d'usure de la bande de roulement.

2. Bande de roulement selon la revendication 1, **caractérisée en ce que** la modification de la forme géométrique de la trace se fait de façon discontinue, c'est-à-dire par pas discrets.

3. Bande de roulement selon la revendication 1, **caractérisée en ce que** la modification de la forme géométrique de la trace se fait de façon continue.

4. Bande de roulement selon l'une des revendications 1 à 3, **caractérisée en ce que** l'indicateur d'usure est formé par une seule cavité (41-43) débouchant sur la surface de roulement.

5. Bande de roulement selon l'une des revendications 1 à 4, **caractérisée en ce que** l'aire de ladite trace est une fonction sensiblement linéaire du taux d'usure de la bande de roulement.

6. Bande de roulement selon l'une des revendications 1 à 5, **caractérisée en ce que** la modification de l'aire de la trace se fait de façon discontinue, c'est-à-dire par pas discrets.

7. Bande de roulement selon l'une des revendications 1 à 5, **caractérisée en ce que** la modification de l'aire de la trace se fait de manière continue.

8. Bande de roulement selon l'une des revendications 1 à 7, **caractérisée en ce que** la trace de la cavité (41-43) sur la surface de roulement (30) a la forme d'un secteur de disque, la mesure de l'angle d'ouverture (α) dudit secteur étant une fonction du taux d'usure de la bande de roulement.

9. Bande de roulement selon l'une des revendications 1 à 7, **caractérisée en ce que** la trace de la cavité (41-43) sur la surface de roulement (30) comprend un secteur d'anneau, l'angle d'ouverture (β) dudit secteur d'anneau étant une fonction du taux d'usure de la bande de roulement (20).

10. Bande de roulement selon l'une des revendications 1 à 9, **caractérisée en ce que** la trace de la cavité (41-43) sur la surface de roulement (30) comprend une surface portante (160) et une pluralité de parties (161) connectées à et faisant saillie sur la surface portante (160), le nombre des parties (161) faisant saillie étant une fonction du taux d'usure de la bande de roulement (20).

11. Bande de roulement selon l'une des revendications 1 à 10, **caractérisée en ce que** une pluralité d'indicateurs d'usure sont disposés transversalement, en plusieurs endroits de la surface de roulement (30).

12. Bande de roulement selon l'une des revendications 1 à 11, **caractérisée en ce que** une pluralité d'indicateurs d'usure sont disposés à des intervalles réguliers sur la surface de roulement (30), dans le sens de sa plus grande dimension.

13. Pneumatique comportant une bande de roulement (20) selon l'une des revendications 1 à 12.

14. Pneumatique comportant une bande de roulement (20) comportant au moins une cavité (41-43) selon l'une des revendications 1 à 12 et au moins un flanc prolongeant la bande de roulement (20), le pneumatique (10) étant **caractérisé en ce qu'**il comprend au moins un moyen visuel sur au moins un flanc, ledit moyen visuel reproduisant au moins la trace de la cavité sur la surface de roulement (30) de la bande de roulement (20) à l'état initial.

15. Pneumatique selon la revendication 14, **caractérisé en ce que** le moyen visuel reproduit la trace de la cavité (41-43) sur la surface de roulement (30) de la bande de roulement (20) à l'état initial et à au moins un autre taux d'usure prédéterminé.

16. Élément moulant (81 ; 82) pour mouler une cavité (41-43) dans la surface de roulement (30) d'un pneumatique (10), cet élément moulant (81 ; 82) comportant une première partie destinée à ancrer l'élément moulant (81 ; 82) dans le moule moulant la surface de roulement (30) et une deuxième partie destinée à mouler la cavité (41-43), un plan P0 séparant lesdites première et deuxième parties, cet élément moulant (81 ; 82) étant **caractérisé en ce que** la forme géométrique de la trace de l'élément moulant, dans un plan P1 parallèle au plan P0, est modifiée en fonction de la distance entre les plans P0 et P1 et **en ce que** la différence entre l'aire de la trace dans un plan P1 parallèle au plan P0 et l'aire de la trace dans un autre plan P2 parallèle au plan P0 est une fonction sensiblement linéaire de la distance entre les plans P1 et P2.

## Revendications (Revendications pour l'(les) Etat(s) contractant(s) suivant(s): AT, BE, CH, DK, ES, GR, LI, LU, MC, NL, SE)

1. Bande de roulement (20) comportant une surface de roulement (30) et au moins un indicateur d'usure formé par au moins une cavité (41-43) débouchant sur la surface de roulement (30), la forme géométrique de la trace (111-115 ; 121-125 ; 131-135 ; 141-145 ; 151-154 ; 171-175 ; 181-185) de la cavité (41-43) sur la surface de roulement étant modifiée en fonction du taux d'usure de la bande de roulement et **caractérisée en ce que** la forme géométrique de ladite trace est une expression analogique du taux d'usure de la bande de roulement.

2. Bande de roulement selon la revendication 1, **caractérisée en ce que** la modification de la forme géométrique de la trace se fait de façon discontinue, c'est-à-dire par pas discrets.

3. Bande de roulement selon la revendication 1, **caractérisée en ce que** la modification de la forme géométrique de la trace se fait de façon continue.

4. Bande de roulement selon l'une des revendications 1 à 3, **caractérisée en ce que** l'indicateur d'usure est formé par une seule cavité (41-43) débouchant sur la surface de roulement.

5. Bande de roulement selon l'une des revendications 1 à 4, **caractérisée en ce que** l'aire de ladite trace change en fonction du taux d'usure de la bande de roulement.

6. Bande de roulement selon la revendication 5, **caractérisée en ce que** l'aire de ladite trace est une fonction sensiblement linéaire du taux d'usure de la bande de roulement.

7. Bande de roulement selon la revendication 5 ou 6, **caractérisée en ce que** la modification de l'aire de la trace se fait de façon discontinue, c'est-à-dire par pas discrets.

8. Bande de roulement selon la revendication 5 ou 6, **caractérisée en ce que** la modification de l'aire de la trace se fait de manière continue.

9. Bande de roulement selon l'une des revendications 5 à 8, **caractérisée en ce que** la trace de la cavité (41-43) sur la surface de roulement (30) a la forme d'un secteur de disque, la mesure de l'angle d'ouverture (α) dudit secteur étant une fonction du taux d'usure de la bande de roulement.

10. Bande de roulement selon l'une des revendications 5 à 8, **caractérisée en ce que** la trace de la cavité (41-43) sur la surface de roulement (30) comprend un secteur d'anneau, l'angle d'ouverture (β) dudit secteur d'anneau étant une fonction du taux d'usure de la bande de roulement (20).

11. Bande de roulement selon l'une des revendications 5 à 10, **caractérisée en ce que** la trace de la cavité (41-43) sur la surface de roulement (30) comprend une surface portante (160) et une pluralité de parties (161) connectées à et faisant saillie sur la surface portante (160), le nombre des parties (161) faisant saillie étant une fonction du taux d'usure de la bande de roulement (20).

12. Bande de roulement selon l'une des revendications 1 à 11, **caractérisée en ce que** une pluralité d'indicateurs d'usure sont disposés transversalement, en plusieurs endroits de la surface de roulement (30).

13. Bande de roulement selon l'une des revendications 1 à 12, **caractérisée en ce que** une pluralité d'indicateurs d'usure sont disposés à des intervalles réguliers sur la surface de roulement (30), dans le sens de sa plus grande dimension.

14. Pneumatique comportant une bande de roulement (20) selon l'une des revendications 1 à 13.

15. Pneumatique comportant une bande de roulement (20) comportant au moins une cavité (41-43) selon l'une des revendications 1 à 13 et au moins un flanc prolongeant la bande de roulement (20), le pneumatique (10) étant **caractérisé en ce qu'**il comprend au moins un moyen visuel sur au moins un flanc, ledit moyen visuel reproduisant au moins la trace de la cavité sur la surface de roulement (30) de la bande de roulement (20) à l'état initial.

16. Pneumatique selon la revendication 15, **caractérisé en ce que** le moyen visuel reproduit la trace de la cavité (41-43) sur la surface de roulement (30) de la bande de roulement (20) à l'état initial et à au moins un autre taux d'usure prédéterminé.

17. Élément moulant (81 ; 82) pour mouler une cavité (41-43) dans la surface de roulement (30) d'un pneumatique (10), cet élément moulant (81 ; 82) comportant une première partie destinée à ancrer l'élément moulant (81 ; 82) dans le moule moulant la surface de roulement (30) et une deuxième partie destinée à mouler la cavité (41-43), un plan P0 séparant lesdites première et deuxième parties, cet élément moulant (81 ; 82) étant **caractérisé en ce que** la forme géométrique de la trace de l'élément moulant, dans un plan P1 parallèle au plan P0, est modifiée en fonction de la distance entre les plans P0 et P1 et **en ce que** la différence entre l'aire de la trace dans un plan P1 parallèle au plan P0 et l'aire de la trace dans un autre plan P2 parallèle au plan P0 est une fonction sensiblement linéaire de la distance entre les plans P1 et P2.

## Claims (Claims for the following Contracting State(s): DE, FR, GB, IT)

1. Tyre tread (20) comprising a rolling surface (30) and at least one wear indicator formed by at least one cavity (41-43) which opens onto the rolling surface (30), wherein the geometrical shape of the trace (111-115 ; 121-125 ; 131-135 ; 141-145 ; 151-154 ; 171-175 ; 181-185) of the cavity (41-43) on the rolling surface changes as a function of the wear level of the tread and **characterized in that** the geometrical shape of said trace is an analogical expression of the tread's wear level and **in that** the area of the said trace changes as a function of the wear level of the tread.

2. Tread according to Claim 1, wherein the change of the geometrical shape of the trace takes place discontinuously, i.e. in discrete steps.

3. Tread according to Claim 1, wherein the change of the geometrical shape of the trace takes place continuously.

4. Tread according to any of Claims 1 to 3, wherein the wear indicator is formed by a single cavity (41-43) opening onto the rolling surface.

5. Tread according to any of Claims 1 to 4, wherein the area of the trace of the cavity is a substantially linear function of the wear level of the tread.

6. Tread according to any of Claims 1 to 5 , wherein the change of the area of the trace takes place discontinuously, i.e. in discrete steps.

7. Tread according to any of Claims 1 to 5, wherein the change of the area of the trace takes place continuously.

8. Tread according to any of Claims 1 to 7, wherein the trace of the cavity (41-43) on the rolling surface (30) has the shape of a disc sector, the size of the opening angle (α) of the said sector being a function of the wear level of the tread (20).

9. Tread according to any of Claims1 to 7, wherein the trace of the cavity (41-43) on the rolling surface (30) comprises a ring sector, the opening angle (β) of the said ring sector being a function of the wear level of the tread (20).

10. Tread according to any of Claims 1 to 9wherein the trace of the cavity (41-43) on the rolling surface (30) comprises a connecting surface (160) and a plurality of parts (161) connected to and projecting from the connecting surface (160), the number of projecting parts (161) being a function of the wear level of the tread (20).

11. Tread according to any of Claims 1 to 10 wherein a plurality of wear indicators are arranged transversely, at several places on the rolling surface (30).

12. Tread according to any of Claims 1 to 11 wherein a plurality of wear indicators are arranged at regular intervals on the rolling surface (30), in the direction of its largest dimension.

13. Tyre (10) comprising a tread (20) according to any of Claims 1 to 12.

14. Tyre comprising a tread (20) that comprises at least one cavity (41-43) according to any of Claims 1 to 12 and at least one sidewall which extends the tread (20), wherein the tyre has at least one visual means on at least one sidewall, the said visual means reproducing at least the trace of the cavity on the rolling surface (30) of the tread (20) in its initial state.

15. Tyre (10) according to Claim 14, wherein the visual means reproduce the trace of the cavity (41-43) in the initial condition and in at least one other, predetermined wear level.

16. Moulding element (81; 82) for moulding a cavity (41-43) in the rolling surface (20) of a tyre (10), this moulding element (81; 82) having a first part designed to anchor the moulding element (81; 82) in the mould for moulding the rolling surface (30) and a second part designed to mould the cavity (41-43), with a plane P0 separating the said first and second parts, wherein the geometrical shape of the trace of the moulding element in a plane P1 parallel to the plane P0 changes as a function of the distance between the planes P0 and P1, and the difference between the trace area in a plane P1 parallel to the plane P0 and the trace area in another plane P2 parallel to the plane P0 is a substantially linear function of the distance between the planes P1 and P2.

## Claims (Claims for the following Contracting State(s): AT, BE, CH, DK, ES, GR, LI, LU, MC, NL, SE)

1. Tyre tread (20) comprising a rolling surface (30) and at least one wear indicator formed by at least one cavity (41-43) which opens onto the rolling surface (30), wherein the geometrical shape of the trace (111-115 ; 121-125 ; 131-135 ; 141-145 ; 151-154 ; 171-175 ; 181-185) of the cavity (41-43) on the rolling surface changes as a function of the wear level of the tread and **characterized in that** the geometrical shape of said trace is an analogical expression of the tread's wear level.

2. Tread according to Claim 1, wherein the change of the geometrical shape of the trace takes place discontinuously, i.e. in discrete steps.

3. Tread according to Claim 1, wherein the change of the geometrical shape of the trace takes place continuously.

4. Tread according to any of Claims 1 to 3, wherein the wear indicator is formed by a single cavity (41-43) opening onto the rolling surface.

5. Tread according to any of Claims 1 to 4, wherein the area of the trace of the cavity changes as a function of the wear level of the tread.

6. Tread according to Claim 5, wherein the area of the trace of the cavity is a substantially linear function of the wear level of the tread.

7. Tread according to any of Claims 5 or 6, wherein the change of the area of the trace takes place discontinuously, i.e. in discrete steps.

8. Tread according to any of Claims 5 or 6, wherein the change of the area of the trace takes place continuously.

9. Tread according to any of Claims 5 to 8, wherein the trace of the cavity (41-43) on the rolling surface (30) has the shape of a disc sector, the size of the opening angle (α) of the said sector being a function of the wear level of the tread (20).

10. Tread according to any of Claims 5 to 8, wherein the trace of the cavity (41-43) on the rolling surface (30) comprises a ring sector, the opening angle (β) of the said ring sector being a function of the wear level of the tread (20).

11. Tread according to any of Claims 5 to 8 wherein the trace of the cavity (41-43) on the rolling surface (30) comprises a connecting surface (160) and a plurality of parts (161) connected to and projecting from the connecting surface (160), the number of projecting parts (161) being a function of the wear level of the tread (20).

12. Tread according to any of Claims 1 to 11 wherein a plurality of wear indicators are arranged transversely, at several places on the rolling surface (30).

13. Tread according to any of Claims 1 to 12 wherein a plurality of wear indicators are arranged at regular intervals on the rolling surface (30), in the direction of its largest dimension.

14. Tyre (10) comprising a tread (20) according to any of Claims 1 to 13.

15. Tyre comprising a tread (20) that comprises at least one cavity (41-43) according to any of Claims 1 to 13 and at least one sidewall which extends the tread (20), wherein the tyre has at least one visual means on at least one sidewall, the said visual means reproducing at least the trace of the cavity on the rolling surface (30) of the tread (20) in its initial state.

16. Tyre (10) according to Claim 15, wherein the visual means reproduce the trace of the cavity (41-43) in the initial condition and in at least one other, predetermined wear level.

17. Moulding element (81; 82) for moulding a cavity (41-43) in the rolling surface (20) of a tyre (10), this moulding element (81; 82) having a first part designed to anchor the moulding element (81; 82) in the mould for moulding the rolling surface (30) and a second part designed to mould the cavity (41-43), with a plane P0 separating the said first and second parts, wherein the geometrical shape of the trace of the moulding element in a plane P1 parallel to the plane P0 changes as a function of the distance between the planes P0 and P1, and the difference between the trace area in a plane P1 parallel to the plane P0 and the trace area in another plane P2 parallel to the plane P0 is a substantially linear function of the distance between the planes P1 and P2.

## Patentansprüche (Patentansprüche für folgende(n) Vertragsstaat(en): DE, FR, GB, IT)

1. Lauffläche (20), die eine Rollfläche (30) und mindestens einen Verschleißindikator aufweist, der durch mindestens einen in der Rollfläche (30) mündenden Hohlraum (41 - 43) gebildet wird, wobei die geometrische Form der Kontur (111 - 115; 121 - 125; 131 - 135; 141 - 145; 151 - 154; 171 - 175; 181 - 185) des Hohlraums (41 - 43) auf der Rollfläche in Abhängigkeit von dem Verschleißgrad der Lauffläche geändert wird, **dadurch gekennzeichnet, dass** die geometrische Form der Kontur ein analoger Ausdruck des Verschleißgrads der Rollfläche ist und dass sich der Flächeninhalt der Kontur in Abhängigkeit von dem Verschleißgrad der Rollfläche ändert.

2. Lauffläche nach Anspruch 1, **dadurch gekennzeichnet, dass** die Änderung der geometrischen Form der Kontur diskontinuierlich, das heißt in diskreten Schritten, erfolgt.

3. Lauffläche nach Anspruch 1, **dadurch gekennzeichnet, dass** die Änderung der geometrischen Form der Kontur kontinuierlich erfolgt.

4. Lauffläche nach einem der Ansprüche 1 bis 3, **dadurch gekennzeichnet, dass** der Verschleißindikator durch einen einzelnen Hohlraum (41 - 43) gebildet wird, der in der Rollfläche mündet.

5. Lauffläche nach einem der Ansprüche 1 bis 4, **dadurch gekennzeichnet, dass** der Flächeninhalt der Kontur eine im Wesentlichen lineare Funktion des Verschleißgrads der Lauffläche ist.

6. Lauffläche nach einem der Ansprüche 1 bis 5, **dadurch gekennzeichnet, dass** die Änderung des Flächeninhalts der Kontur diskontinuierlich, das heißt in diskreten Schritten, erfolgt.

7. Lauffläche nach einem der Ansprüche 1 bis 5, **dadurch gekennzeichnet, dass** die Änderung des Flächeninhalts der Kontur kontinuierlich erfolgt.

8. Lauffläche nach einem der Ansprüche 1 bis 7, **dadurch gekennzeichnet, dass** die Kontur des Hohlraums (41 - 43) auf der Rollfläche (30) die Form eines Scheibensektors hat, wobei die Größe des Öffnungswinkels (α) des Sektors eine Funktion des Verschleißgrads der Lauffläche ist.

9. Lauffläche nach einem der Ansprüche 1 bis 7, **dadurch gekennzeichnet, dass** die Kontur des Hohlraums (41 - 43) auf der Rollfläche (30) einen Ringsektor umfasst, wobei der Öffnungswinkel (β) des Ringsektors eine Funktion des Verschleißgrads der Lauffläche (20) ist.

10. Lauffläche nach einem der Ansprüche 1 bis 9, **dadurch gekennzeichnet, dass** die Kontur des Hohlraums (41 - 43) auf der Rollfläche (30) eine Anlagefläche (160) und mehrere Teile (161) umfasst, die mit der Anlagefläche (160) verbunden sind und davon vorragen, wobei die Anzahl der vorragenden Teile (161) eine Funktion des Verschleißgrads der Lauffläche (20) ist.

11. Lauffläche nach einem der Ansprüche 1 bis 10, **dadurch gekennzeichnet, dass** mehrere Verschleißindikatoren an mehreren Stellen der Rollfläche (30) in Querrichtung angeordnet sind.

12. Lauffläche nach einem der Ansprüche 1 bis 11, **dadurch gekennzeichnet, dass** mehrere Verschleißindikatoren in gleichmäßigen Abständen auf der Rollfläche (30) in Richtung seiner größten Abmessung angeordnet sind.

13. Luftreifen, der eine Lauffläche (20) nach einem der Ansprüche 1 bis 12 enthält.

14. Luftreifen, der eine Lauffläche (20) enthält, die mindestens einen Hohlraum (41 - 43) nach einem der Ansprüche 1 bis 12 und mindestens eine Flanke, die die Lauffläche (20) verlängert, aufweist, wobei der Luftreifen (10) **dadurch gekennzeichnet ist, dass** er mindestens ein optisches Mittel auf mindestens einer Flanke umfasst, wobei das optische Mittel mindestens die Kontur des Hohlraums auf der Rollfläche (30) der Lauffläche (20) im Anfangszustand wiedergibt.

15. Luftreifen nach Anspruch 14, **dadurch gekennzeichnet, dass** das optische Mittel die Kontur des Hohlraums (41 - 43) auf der Rollfläche (30) der Lauffläche (20) im Anfangszustand und bei mindestens einem anderen vorbestimmten Verschleißgrad wiedergibt.

16. Formelement (81; 82) zum Formen eines Hohlraums (41 - 43) in der Rollfläche (30) eines Luftreifens (10), wobei dieses Formelement (81; 82) einen ersten Teil, der das Formelement (81; 82) in dem die Rollfläche (30) formenden Formwerkzeug verankert, und einen zweiten Teil, der den Hohlraum. (41 - 43) formen soll, aufweist, wobei eine Ebene P0 den ersten und den zweiten Teil trennt, wobei dieses Formelement (81; 82) **dadurch gekennzeichnet ist, dass** die geometrische Form der Kontur des Formelements in einer parallel zur Ebene P0 verlaufenden Ebene P1 in Abhängigkeit von dem Abstand zwischen den Ebenen P0 und P1 geändert wird und dass der Unterschied zwischen dem Flächeninhalt der Kontur in einer parallel zur Ebene P0 verlaufenden Ebene P1 und dem Flächeninhalt der Kontur in einer anderen, parallel zur Ebene P0 verlaufenden Ebene P2 eine im Wesentlichen lineare Funktion des Abstands zwischen den Ebenen P1 und P2 ist.

## Patentansprüche (Patentansprüche für folgende(n) Vertragsstaat(en): AT, BE, CH, DK, ES, GR, LI, LU, MC, NL, SE)

1. Lauffläche (20), die eine Rollfläche (30) und mindestens einen Verschleißindikator aufweist, der durch mindestens einen in der Rollfläche (30) mündenden Hohlraum (41 - 43) gebildet wird, wobei die geometrische Form der Kontur (111 - 115; 121 - 125; 131 - 135; 141 - 145; 151 - 154; 171 - 175; 181 - 185) des Hohlraums (41 - 43) auf der Rollfläche in Abhängigkeit von dem Verschleißgrad der Lauffläche geändert wird, **dadurch gekennzeichnet, dass** die geometrische Form der Kontur ein analoger Ausdruck des Verschleißgrads der Rollfläche ist.

2. Lauffläche nach Anspruch 1, **dadurch gekennzeichnet, dass** die Änderung der geometrischen Form der Kontur diskontinuierlich, das heißt in diskreten Schritten, erfolgt.

3. Lauffläche nach Anspruch 1, **dadurch gekennzeichnet, dass** die Änderung der geometrischen Form der Kontur kontinuierlich erfolgt.

4. Lauffläche nach einem der Ansprüche 1 bis 3, **dadurch gekennzeichnet, dass** der Verschleißindikator durch einen einzelnen Hohlraum (41 - 43) gebildet wird, der in der Rollfläche mündet.

5. Lauffläche nach einem der Ansprüche 1 bis 4, **dadurch gekennzeichnet, dass** sich der Flächeninhalt der Kontur in Abhängigkeit von dem Verschleißgrad der Lauffläche ändert.

6. Lauffläche nach Anspruch 5, **dadurch gekennzeichnet, dass** der Flächeninhalt der Kontur eine im Wesentlichen lineare Funktion des Verschleißgrads der Lauffläche ist.

7. Lauffläche nach Anspruch 5 oder 6, **dadurch gekennzeichnet, dass** die Änderung des Flächeninhalts der Kontur diskontinuierlich, das heißt in diskreten Schritten, erfolgt.

8. Lauffläche nach Anspruch 5 oder 6, **dadurch gekennzeichnet, dass** die Änderung des Flächeninhalts der Kontur kontinuierlich erfolgt.

9. Lauffläche nach einem der Ansprüche 5 bis 8, **dadurch gekennzeichnet, dass** die Kontur des Hohlraums (41 - 43) auf der Rollfläche (30) die Form eines Scheibensektors hat, wobei die Größe des Öffnungswinkels (α) des Sektors eine Funktion des Verschleißgrads der Lauffläche ist.

10. Lauffläche nach einem der Ansprüche 5 bis 8, **dadurch gekennzeichnet, dass** die Kontur des Hohlraums (41 - 43) auf der Rollfläche (30) einen Ringsektor umfasst, wobei der Öffnungswinkel (β) des Ringsektors eine Funktion des Verschleißgrads der Lauffläche (20) ist.

11. Lauffläche nach einem der Ansprüche 5 bis 10, **dadurch gekennzeichnet, dass** die Kontur des Hohlraums (41 - 43) auf der Rollfläche (30) eine Anlagefläche (160) und mehrere Teile (161) umfasst, die mit der Anlagefläche (160) verbunden sind und davon vorragen, wobei die Anzahl der vorragenden Teile (161) eine Funktion des Verschleißgrads der Lauffläche (20) ist.

12. Lauffläche nach einem der Ansprüche 1 bis 11, **dadurch gekennzeichnet, dass** mehrere Verschleißindikatoren an mehreren Stellen der Rollfläche (30) in Querrichtung angeordnet sind.

13. Lauffläche nach einem der Ansprüche 1 bis 12, **dadurch gekennzeichnet, dass** mehrere Verschleißindikatoren in gleichmäßigen Abständen auf der Rollfläche (30) in Richtung seiner größten Abmessung angeordnet sind.

14. Luftreifen, der eine Lauffläche (20) nach einem der Ansprüche 1 bis 13 enthält.

15. Luftreifen, der eine Lauffläche (20) enthält, die mindestens einen Hohlraum (41 - 43) nach einem der Ansprüche 1 bis 13 und mindestens eine Flanke, die die Lauffläche (20) verlängert, aufweist, wobei der Luftreifen (10) **dadurch gekennzeichnet ist, dass** er mindestens ein optisches Mittel auf mindestens einer Flanke umfasst, wobei das optische Mittel mindestens die Kontur des Hohlraums auf der Rollfläche (30) der Lauffläche (20) im Anfangszustand wiedergibt.

16. Luftreifen nach Anspruch 15, **dadurch gekennzeichnet, dass** das optische Mittel die Kontur des Hohlraums (41 - 43) auf der Rollfläche (30) der Lauffläche (20) im Anfangszustand und bei mindestens einem anderen vorbestimmten Verschleißgrad wiedergibt.

17. Formelement (81; 82) zum Formen eines Hohlraums (41 - 43) in der Rollfläche (30) eines Luftreifens (10), wobei dieses Formelement (81; 82) einen ersten Teil, der das Formelement (81; 82) in dem die Rollfläche (30) formenden Formwerkzeug verankert, und einen zweiten Teil, der den Hohlraum (41 - 43) formen soll, aufweist, wobei eine Ebene P0 den ersten und den zweiten Teil trennt, wobei dieses Formelement (81; 82) **dadurch gekennzeichnet ist, dass** die geometrische Form der Kontur des Formelements in einer parallel zur Ebene P0 verlaufenden Ebene P1 in Abhängigkeit von dem Abstand zwischen den Ebenen P0 und P1 geändert wird und dass der Unterschied zwischen dem Flächeninhalt der Kontur in einer parallel zur Ebene P0 verlaufenden Ebene P1 und dem Flächeninhalt der Kontur in einer anderen, parallel zur Ebene P0 verlaufenden Ebene P2 eine im Wesentlichen lineare Funktion des Abstands zwischen den Ebenen P1 und P2 ist.
